# EUROPÄISCHE PATENTSCHRIFT

(11) **EP 0 700 717 B1**
(45) Veröffentlichungstag und Bekanntmachung des Hinweises auf die Patenterteilung: **01.03.2000**
(21) Anmeldenummer: 95112288.6
(22) Anmeldetag: 04.08.1995
(51) Int. Cl.: B01J 23/28, B01J 23/30, B01D 53/86

(54) **Verfahren zur Zersetzung von HCN in Gasen mit einem Katalysator**
Process for decomposition of HCN in gases with a catalyst
Un procédé pour la décomposition de HCN dans des gaz avec un catalyseur

(30) Priorität: 07.09.1994 DE 4431788
(43) Veröffentlichungstag der Anmeldung: 13.03.1996
(73) Patentinhaber: Degussa-Hüls Aktiengesellschaft, 60287 Frankfurt am Main (DE)
(72) Erfinder: Kaizik, Alfred, Dr., D-45772 Marl (DE); Maschmeyer, Dietrich, Dr., D-45657 Recklinghausen (DE); Nierlich, Franz, Dr., D-45768 Marl (DE)
(74) Vertreter: Olbricht, Gerhard, Dr.

(56) Entgegenhaltungen:
- EP-A- 0 051 156
- DE-A- 3 736 478
- DE-A- 4 319 234
- DE-B- 2 458 888
- DE-C- 2 658 569
- DATABASE WPI Section Ch, Week 7809 Derwent Publications Ltd., London, GB; Class E35, AN 78-16602A & JP-A-53 005 065 ( NITTO CHEM IND KK) , 18.Januar 1978

## Beschreibung

Die Erfindung betrifft einen Katalysator auf Basis von Titanoxid und/oder Zirkonoxid zur Zersetzung von HCN in Gasen sowie ein Verfahren zur Zersetzung von HCN in Gasen.

Zahlreiche Kohlenwasserstoff-haltige Gasgemische, wie etwa die bei der Vergasung von Kohle oder Öl oder anderer Kohlenwasserstoff-haltiger Substanzen, gewonnen in Gasgemischen, müssen vor ihrer Weiterverarbeitung von Sauergasanteilen wie H₂S befreit werden. Die H₂S-Entfernung wird üblicherweise, insbesondere im Fall niedriger H₂S-Gehalte, durch eine Gaswäsche mit einem chemisch oder physikalisch wirkenden Lösungsmittel durchgeführt. Da im Gasgemisch enthaltendes HCN von den üblicherweise eingesetzten Lösungsmitteln gelöst wird und weil HCN bei der Regenerierung des Lösungsmittels nicht vollständig aus dem Lösungsmittel entfernt wird, kommt es zu einer HCN-Anreicherung im Lösungsmittel, vielfach sogar zu einer Zersetzung des Lösungsmittels durch HCN. Daher wird in an sich bekannter Weise HCN vor der Sauergaswäsche durch katalytische Zersetzung entfernt.

Darüber hinaus ist in vielen technischen Prozessen die Zersetzung von HCN in Gasen erwünscht, ohne daß hierbei andere Reaktionen als die HCN-Zersetzung im Gas katalysiert werden.

Die noch nicht veröffentlichte, ältere deutsche Patentanmeldung 43 19 234 lehrt ein Verfahren zur Entfernung von HCN aus zumindestens HCN und Schwefelverbindungen enthaltenden Gasgemischen, insbesondere aus durch partielle Oxidation bzw. Vergasung von Kohle oder Öl gewonnenen Gasgemischen durch katalytische Zersetzung von HCN, wobei das Gasgemisch mit einem Katalysator in Kontakt gebracht wird, der das HCN durch Hydrieren und/oder durch Hydrolyse zersetzt und im Gasgemisch enthaltenes COS zumindest teilweise an diesem Katalysator durch Hydrolyse zersetzt wird. Insbesondere werden Katalysatoren verwendet, die auf Titanoxid und/oder Zirkonoxid-Basis als Trägermaterialien aufgebaut sind. Als weitere katalytisch aktive Komponente wird Chromtrioxid beansprucht.

Chromtrioxid-haltige Katalysatoren können bei ihrer Herstellung und Entsorgung aufgrund der hohen Toxizität des Chromtrioxids Probleme aufwerfen, da beim Umgang mit Chromtrioxid strenge Sicherheits- und Umweltschutz-Auflagen zu erfüllen sind.

Darüber hinaus weisen die Katalysatoren gemäß dem Stand der Technik eine zu geringe Aktivität auf, so daß entweder große Reaktorvolumina oder hohe Reaktionstemperaturen erforderlich sind.

Der Erfindung liegt die Aufgabe zugrunde, ein Verfahren zur Zersetzung von HCN in Gasen zu entwickeln, wobei der eingesetzte Katalysator eine höhere Aktivität aufweisen und umweltverträglicher sein soll.

Es wurde nun überraschenderweise gefunden, daß ein Katalysator auf Basis von Titanoxid und/oder Zirkonoxid, der als weitere katalytisch aktive Komponenten Molybdän und/oder Vanadium und/oder Wolfram und/oder Mangan und/oder Silizium und/oder Selen und/oder Tellur und/oder Niob und/oder Tantal und/oder Schwefel und/oder Phosphor in Form ihrer Oxide und/oder Oxidhydrate und/oder anderer Verbindungen enthält, sehr umweltverträglich ist und eine überraschend hohe Aktivität bei der Zersetzung von HCN in Gasen aufweist.

Gegenstand der vorliegenden Erfindung ist daher ein Verfahren zur Zersetzung von HCN in Schwelgasen aus der Vergasung von Kohle und Öl mit einem Katalysator auf Basis von Titanoxid und/oder Zirkonoxid, wobei der Katalysator als weitere katalytisch aktive Komponenten Molybdän und/oder Vanadium und/oder Wolfram und/oder Mangan und/oder Silizium und/oder Selen und/oder Tellur und/oder Niob und/oder Tantal und/oder Schwefel und/oder Phosphor in Form ihrer Oxide und/oder Oxidhydrate, berechnet als Oxid ihrer höchsten Wertigkeitsstufe, jeweils 0.05 bis 30 Gew.-% beträgt und das HCN enthaltende Gas Wasserdampf sowie reduzierende Verbindungen enthält.

Des weiteren ist Gegenstand der vorliegenden Erfindung ein Verfahren zur Zersetzung von HCN in Gasen, das dadurch gekennzeichnet ist, daß das HCN enthaltende Gas über einen Katalysator gemäß den Ansprüchen 1 bis 5 geleitet wird.

Der Gehalt des Katalysators beträgt an Molybdän und/oder Vanadium und/oder Wolfram und/oder Mangan und/oder Silizium und/oder Selen und/oder Tellur und/oder Niob und/oder Tantal und/oder Schwefel und/oder Phosphor in Form ihrer Oxide und/oder Oxidhydrate und/oder anderer Verbindungen, berechnet als Oxide ihrer höchsten Wertigkeitsstufe, jeweils 0,05 bis 30 Gew.-%.

Darüber hinaus kann der erfindungsgemäße Katalysator noch weitere Komponenten enthalten. So kann der erfindungsgemäße Katalysator beispielsweise noch zusätzlich Alkalioxide und/oder Erdalkalioxide und/oder Eisenoxid und/oder Kobaltoxid und/oder Nickeloxid enthalten.

Vorzugsweise beträgt der Gehalt des erfindungsgemäßen Katalysators an Alkalioxiden und/oder Erdalkalioxiden und/oder Eisenoxid und/oder Kobaltoxid und/oder Nickeloxid, berechnet als Oxid der höchsten Wertigkeitsstufe des Metalls, jeweils 0,1 bis 8 Gew.-%.

Der erfindungsgemäße Katalysator kann gemäß den bekannten Verfahren hergestellt werden, die beispielsweise in DE-PS 24 58 888, DE-PS 26 58 569 und DE-OS 37 36 478 beschrieben sind.

Der erfindungsgemäße Katalysator kann die verschiedensten äußeren Formen besitzen. So kann er beispielsweise in Form von Pulvern, Tabletten, Strangextrudaten, Platten oder monolithischen Wabenkörpern eingesetzt werden. Vorzugsweise besitzt der erfindungsgemäße Katalysator die Form von monolithischen Wabenkörpern. Solche monolithischen Wabenkörper weisen eine Vielzahl paralleler Kanäle auf, deren Achsen in Richtung des Gasstromes orientiert sind.

Das HCN enthaltende Gas kann noch die verschiedensten weiteren Verbindungen enthalten. So enthält das HCN enthaltende Gas Wasserdampf, und es kann darüber hinaus noch reduzierende Verbindungen, wie z. B. Wasserstoff und Kohlenmonoxid, enthalten. Des weiteren können auch noch beispielsweise Kohlenwasserstoffe und Olefine in dem HCN enthaltenden Gas anwesend sein.

Geeigneterweise sollte der HCN-Gehalt des Gases im erfindungsgemäßen Verfahren 0,001 bis 2 000 Vol.-ppm betragen.

Vorzugsweise wird das HCN-enthaltende Gas mit einer Raumgeschwindigkeit (GHSV) von 1 000 h⁻¹ bis 100 000 h⁻¹, besonders vorzugsweise mit einer Raumgeschwindigkeit (GHSV) von 10 000 h⁻¹ bis 50 000 h⁻¹ über den Katalysator geleitet. Die Abkürzung "GHSV" bedeutet "Gas hourly space velocity".

Im erfindungsgemäßen Verfahren wird vorzugsweise das HCN-enthaltende Gas bei Temperaturen von 20 bis 200 °C, besonders vorzugsweise bei Temperaturen von 100 bis 170 °C über den Katalysator geleitet.

Die erfindungsgemäßen Katalysatoren und das erfindungsgemäße Verfahren bieten technisch sehr große Vorteile. So erfolgt gemäß den Verfahren nach dem Stand der Technik die HCN-Zersetzung in der Regel erst bei Temperaturen von oberhalb 200 °C. Hingegen läßt sich im erfindungsgemäßen Verfahren die HCN-Zersetzung bei wesentlich niedrigeren Temperaturen durchführen. Zusätzlich werden durch die hohe Aktivität des erfindungsgemäßen Katalysators hohe Raumgeschwindigkeiten ermöglicht, so daß sehr viel Katalysatorvolumen und damit auch Reaktorvolumen eingespart werden kann. Ein weiterer großer Vorteil des erfindungsgemäßen Verfahrens besteht darin, daß auch Katalysatoren in Wabenform einzusetzen sind und damit der Druckverlust extrem geringgehalten werden kann.

Die Erfindung wird durch die nachfolgenden Beispiele näher erläutert:

Die Beispiele wurden in einem kontinuierlich betriebenen Rohrreaktor mit einer Länge von 310 mm und einem Innendurchmesser von 29,7 mm durchgeführt. Der Katalysator wurde als Schüttung eingebracht. Die Betriebstemperatur wurde über einen elektisch betriebenen Gasvorwärmer geregelt. Das den Reaktor durchströmende Gas wurde mit Hilfe einer Durchflußregelung dosiert. Die Messung der HCN-Konzentration im Gas erfolgte durch Sorption in verdünnter Natronlauge und anschließende maßanalytische Bestimmung mit dem Testsystem "Mikroquant CN" der Firma Merck.

### Vergleichsbeispiel 1

In Beispiel 1 wurde die Lehre der DE-OS 35 17 169 nachgearbeitet.

Dazu wurde der Reaktor bis zu einer Höhe von ca. 22 cm mit Tabletten (5 * 5 mm) aus Titandioxid, hergestellt aus dem Material P 25 von Degussa, gefüllt. Dieses Material ist hochrein, insbesondere frei von möglichen Oxosäuren (außer TiO₂), besteht überwiegend aus Anatas und hat eine BET-Oberfläche von etwa 40 m²/g.

Dann wurde ein Strom von HCN-haltigem Gas der Zusammensetzung 18 % H₂, 18 % CO, 6 % H₂O und 58 % N₂ über den Katalysator geleitet. Die folgende Tabelle gibt die Ergebnisse wieder.

| Temperatur °C | GHSV (h⁻¹) | HCN ppm | HCN-Umsatz % |
|---|---|---|---|
| 250 | 1000 | 102 | 95 |
| 250 | 3000 | 107 | 81 |
| 200 | 3000 | 103 | 49 |
| 170 | 3000 | 106 | 32 |
| 150 | 3000 | 107 | 19 |

### Beispiel 1 (erfindungsgemäß)

### a.) Herstellung eines sulfathaltigen Katalysators

2 000 g eines in 4 mm-Strängen extrudierten TiO₂-Katalysatorträgers mit einer BET-Oberfläche von ca. 50 m²/g (H 9050 der Fa. Hüls AG) wurde mit einer Lösung von 70 g H₂SO₄ in 440 ml Wasser imprägniert und bei 150 °C getrocknet. Es ergab sich ein Sulfatgehalt von etwa 3,5 Gew.-% im Katalysator.

### b.) Bestimmung des HCN-Umsatzes

Bei der Bestimmung des HCN-Umsatzes wurde verfahren wie im Vergleichsbeispiel 1, jedoch wurde jetzt der Reaktor in einer Länge von nur 40 mm mit dem oben unter a.) beschriebenen Katalysator gefüllt. Die folgende Tabelle gibt die Zusammensetzung des eingesetzten Gases und die Ergebnisse wieder.

| Temperatur °C | GHSV h⁻¹ | H₂O % | H₂ % | CO % | N₂ % | HCN ppm | HCN-Umsatz % |
|---|---|---|---|---|---|---|---|
| 119 | 3000 | 5 | 76 | - | 19 | 111 | 100 |
| 152 | 3000 | 5 | 76 | - | 19 | 111 | 100 |
| 121 | 6000 | 5 | 76 | - | 19 | 107 | 100 |
| 153 | 18000 | 5 | 15 | - | 80 | 92 | 22,4 |
| 171 | 11000 | 5 | 15 | - | 80 | 123 | 39,0 |
| 173 | 3000 | 5 | 15 | - | 80 | 167 | 93 |
| 153 | 2853 | 5 | 15 | - | 80 | 105 | 84,1 |
| 172 | 3000 | 5 | 76 | - | 19 | 135 | 100 |
| 173 | 3000 | 5 | 15 | - | 80 | 132 | 92,3 |
| 173 | 3000 | 5 | - | - | 95 | 120 | 73 |
| 153 | 3000 | 15 | - | - | 85 | 114 | 96,8 |
| 154 | 3000 | 5 | 18 | 18 | 59 | 130 | 88,5 |
| 153 | 3000 | 15 | 18 | 18 | 49 | 128 | 99,6 |
| 151 | 7300 | 15 | 18 | 18 | 49 | 128 | 99,1 |
| 173 | 9000 | 15 | 18 | 18 | 49 | 128 | 100 |
| 173 | 9000 | 5 | 18 | 18 | 59 | 128 | 91 |

### Vergleichsbeispiel 2 (gemäß deutscher Patentanmeldung 43 19 234.3)

Verfahren wurde wie in Beispiel 1 (b), jedoch wurde jetzt der Reaktor in einer Länge von 40 mm mit einem Katalysator gefüllt, der aus Strangextrudaten von 4 mm Durchmesser bestand. Die BET-Oberfläche betrug ca. 50 m²/g; an der Oberfläche waren etwa 8,0 % Chromat sorbiert. Vor dem Versuch wurde der Katalysator bei 350 °C in Wasserstoff reduziert. Das Gas setzt sich aus 20 % N₂, 6 % H₂O sowie 74 % H₂ zusammen. Die folgende Tabelle gibt die Ergebnisse wieder.

| Temperatur °C | GHSV (h⁻¹) | HCN ppm | HCN-Umsatz % |
|---|---|---|---|
| 150 | 1180 | 110 | 91 |
| 170 | 1180 | 110 | 93 |
| 200 | 1180 | 110 | 99 |
| 245 | 1180 | 110 | 100 |
| 160 | 2940 | 50 | 30 |
| 200 | 2940 | 50 | 81 |
| 250 | 2940 | 50 | 96 |

### Beispiel 2 (erfindungsgemäß)

### a.) Herstellung eines molybdathaltigen Katalysators

2 000 g eines in 4 mm-Strängen extrudierten TiO₂-Katalysatorträgers mit einer BET-Oberfläche von ca. 50 m²/g (H 9050 der Fa. Hüls AG) wurde mit einer Lösung von 526 g Ammoniumheptamolybdat-Tetrahydrat in 650 ml Gesamtlösung (Lösemittel Wasser) imprägniert, bei 150 °C getrocknet und bei 350 °C kalziniert. Es ergab sich ein MoO₃-Gehalt von etwa 14,0 Gew.-% im Katalysator.

### b.) Bestimmung des HCN-Umsatzes

Bei der Bestimmung des HCN-Umsatzes wurde verfahren wie in Beispiel 1 (b), jedoch wurde jetzt der Reaktor in einer Länge von 40 mm mit dem oben unter a.) beschriebenen Katalysator gefüllt. Das Gas setzt sich aus 20 % N₂, 6 % H₂O sowie 74 % H₂ zusammen. Die folgende Tabelle gibt die Ergebnisse wieder.

| Temperatur °C | GHSV (h⁻¹) | HCN ppm | HCN-Umsatz % |
|---|---|---|---|
| 250 | 1000 | 103 | 100 |
| 250 | 3000 | 102 | 100 |
| 200 | 3000 | 101 | 100 |
| 170 | 3000 | 105 | 100 |
| 150 | 3000 | 104 | 99.5 |
| 170 | 9000 | 106 | 100 |
| 170 | 15000 | 105 | 99 |
| 120 | 9000 | 106 | 99 |

### Beispiel 3 (erfindungsgemäß)

### a.) Herstellung eines wolframathaltiqen Katalysators

2 000 g eines in 4 mm-Strängen extrudierten TiO₂-Katalysatorträgers mit einer BET-Oberfläche von ca. 50 m²/g (H 9050 der Fa. Hüls AG) wurde mit einer Lösung von 507 g Ammoniummetawolframat-Hexahydrat in 850 ml Gesamtlösung (Lösemittel Wasser) imprägniert, bei 150 °C getrocknet und bei 350 °C kalziniert. Es ergab sich ein WO₃-Gehalt von etwa 23,0 Gew.-% im Katalysator.

### b.) Bestimmung des HCN-Umsatzes

Bei der Bestimmung des HCN-Umsatzes wurde verfahren wie in Beispiel 1 (b), jedoch wurde jetzt der Reaktor in einer Länge von 40 mm mit dem oben unter a.) beschriebenen Katalysator gefüllt. Das Gas setzt sich aus 20 % N₂, 6 % H₂O sowie 74 % H₂ zusammen. Die folgende Tabelle gibt die Ergebnisse wieder.

| Temperatur °C | GHSV (h⁻¹) | HCN ppm | HCN-Umsatz % |
|---|---|---|---|
| 170 | 3000 | 110 | 100 |
| 150 | 3000 | 102 | 99.6 |
| 170 | 9000 | 101 | 100 |
| 170 | 15000 | 112 | 99 |
| 120 | 9000 | 116 | 97 |

### Beispiel 4 (erfindungsgemäß)

### a.) Herstellung eines phosphathaltigen Katalysators gemäß Erfindung

2 000 g eines in 4 mm-Strängen extrudierten TiO₂-Katalysatorträgers mit einer BET-Oberfläche von ca. 50 m²/g (H 9050 der Fa. Hüls AG) wurde mit einer Lösung von 60 g H₃PO₄ in 540 ml Gesamt lösung (Lösemittel Wasser) imprägniert und bei 150 °C getrocknet. Es ergab sich ein PO₄-Gehalt von etwa 2,4 Gew.-% im Katalysator.

### b.) Bestimmung des HCN-Umsatzes

Bei der Bestimmung des HCN-Umsatzes wurde verfahren wie in Beispiel 1 (b), jedoch wurde jetzt der Reaktor in einer Länge von 40 mm mit dem oben unter a.) beschriebenen Katalysator gefüllt. Das Gas setzt sich aus 20 % N₂, 6 % H₂O sowie 74 % H₂ zusammen. Die folgende Tabelle gibt die Ergebnisse wieder.

| Temperatur °C | GHSV (h⁻¹) | HCN ppm | HCN-Umsatz % |
|---|---|---|---|
| 170 | 3000 | 120 | 100 |
| 150 | 6000 | 107 | 99.6 |
| 170 | 9000 | 109 | 100 |
| 170 | 15000 | 120 | 98 |
| 120 | 6000 | 124 | 94 |

### Beispiel 5 (erfindungsgemäß)

### a.) Herstellung eines vanadathaltigen Katalysators gemäß Erfindung

2 000 g eines in 4 mm-Strängen extrudierten TiO₂-Katalysatorträgers mit einer BET-Oberfläche von ca. 50 m²/g (H 9050 der Fa. Hüls AG) wurde mit 800 ml einer Lösung von Ammoniummetavanadat (w(V₂O₅) = 250 g/l) in Wasser imprägniert und bei 150 °C getrocknet. Es ergab sich ein V₂O₅-Gehalt von etwa 20 Gew.-% im Katalysator.

### b.) Bestimmung des HCN-Umsatzes

Bei der Bestimmung des HCN-Umsatzes wurde verfahren wie in Beispiel 2, jedoch wurde jetzt der Reaktor in einer Länge von nur 40 mm mit dem oben unter a.) beschriebenen Katalysator gefüllt. Das Gas setzt sich aus 20 % N₂, 6 % H₂O, 100 ppm HCN sowie 74 % H₂ zusammen. Bei 170 °C und einer GHSV von 3 000 erfolgte ein Umsatz der HCN von 97 %.

### Beispiel 6 (erfindungsgemäß)

### a.) Herstellung eines selenathaltigen Katalysators gemäß Erfindung

2 000 g eines in 4 mm-Strängen extrudierten TiO₂-Katalysatorträgers mit einer BET-Oberfläche von ca. 50 m²/g (H 9050 der Fa. Hüls AG) wurde mit 800 ml einer Lösung von Ammoniumselenat (w(SeO₂) = 70 g/l) in Wasser imprägniert und bei 150 °C getrocknet. Es ergab sich ein SeO₂-Gehalt von etwa 3,5 Gew.-% im Katalysator.

### b.) Bestimmung des HCN-Umsatzes

Bei der Bestimmung des HCN-Umsatzes wurde verfahren wie in Beispiel 1, jedoch wurde jetzt der Reaktor in einer Länge von 40 mm mit dem oben unter a.) beschriebenen Katalysator gefüllt. Das Gas setzt sich aus 20 % N₂, 6 % H₂O, 100 ppm HCN sowie 74 % H₂ zusammen. Bei 170 °C und einer GHSV von 3 000 erfolgte ein Umsatz der HCN von 97,5 %.

### Beispiel 7 (erfindungsgemäß): Dotierung eines sulfathaltigen Katalysators mit Eisen, Nickel oder Kobalt

Der Katalysator gemäß Beispiel 1 wurde bei 250 °C kalziniert, dann mit einer Nitratlösung je eines der Metalle Eisen, Nickel und Kobalt getränkt und wiederum bei 250 °C kalziniert. Die Konzentration des betreffenden Metalls im fertigen Katalysator betrug dann etwa 5 %. Anschließend wurde die Hydrolyseaktivität des Katalysators gemäss Beispiel 2 (b) bestimmt. Dazu wurde der Reaktor in einer Länge von 40 mm mit dem oben unter a.) beschriebenen Katalysator gefüllt. Das Gas setzt sich aus 20 % N₂, 6 % H₂O, 100 ppm HCN sowie 74 % H₂ zusammen. Bei 120 °C und einer GHSV von 3 000 erfolgte ein Umsatz der HCN von 98 % (Nickel), 98,7 % (Eisen), und 97,6 % (Kobalt).

### Beispiel 8 (erfindungsgemäß): Dotierung eines molybdathaltigen Katalysators mit Kalzium, Strontium und Barium

Der Katalysator gemäß Beispiel 2 wurde bei 250 °C kalziniert, dann mit einer Nitratlösung je eines der Metalle Kalzium, Strontium und Barium getränkt und wiederum bei 250 °C kalziniert. Die Konzentration des betreffenden Metalls im fertigen Katalysator betrug dann etwa 2,5 %. Anschließend wurde die Hydrolyseaktivität des Katalysators gemäß Beispiel 2 (b) bestimmt. Dazu wurde der Reaktor in einer Länge von 40 mm mit dem oben unter a.) beschriebenen Katalysator gefüllt. Das Gas setzt sich aus 20 % N₂, 6 % H₂O, 100 ppm HCN sowie 74 % H₂ zusammen. Bei 120 °C und einer GHSV von 3 000 erfolgte ein Umsatz der HCN von 97 % (Kalzium), 99 % (Strontium), und 96,4 % (Barium).

### Beispiel 9 (erfindungsgemäß): Einsatz eines wabenförmigen Katalysators

### a.) Herstellung eines molybdathaltigen wabenförmigen Katalysators gemäß Erfindung

Ein extrudierter Körper mit 16 Hohlkanälen quadratischen Querschnittes von je etwa 3,2 mm Kantenlänge und einer Dicke der dazwischenliegenden Stege von etwa 1,1 mm und einer Länge von 7,5 cm (nicht mit zusätzlichen Aktivkomponenten beaufschlagter Katalysatorträger für den Entstickungskatalysator der KWH) wurde mit einer Lösung von 526 g Ammoniumheptamolybdat-Tetrahydrat in 650 ml Gesamtlösung (Lösemittel Wasser) imprägniert, bei 150 °C getrocknet und bei 350 °C kalziniert. Es ergab sich ein MoO₃-Gehalt von etwa 14,0 Gew.-% im Katalysator.

### b.) Bestimmung des HCN-Umsatzes

Die Bestimmung des HCN-Umsatzes erfolgte ähnlich den bisher beschriebenen Testungen, jedoch wurde jetzt der imprägnierte Katalysatorkörper in das Reaktorrohr eingebaut und so eingedichtet, daß nur eine Durchströmung der inneren Kanäle erfolgte. Das Gas setzte sich aus 20 % N₂, 6 % H₂O sowie 74 % H₂ zusammen. Die folgende Tabelle gibt die Ergebnisse wieder.

| Temperatur °C | GHSV (h⁻¹) | HCN ppm | HCN-Umsatz % |
|---|---|---|---|
| 200 | 3000 | 110 | 100 |
| 170 | 3000 | 120 | 100 |
| 150 | 3000 | 104 | 99.5 |
| 170 | 9000 | 130 | 100 |
| 120 | 9000 | 112 | 87 |

Der Druckverlust über den Reaktor war trotz der verringerten Querschnittsfläche etwa geringer als bei den geschütteten Katalysatoren. Das Beispiel zeigt, daß eine Anbringung des Katalysators auf einem Wabenkörper realisierbar ist und technische Vorteile bringt.

### Beispiel 10 (erfindungsgemäß): Träger ZrO₂

### a.) Herstellung eines sulfathaltigen Katalysators gemäß Erfindung

100 g in 4*4 mm-Tabletten gepreßter ZrO₂-Katalysatorträger mit einer BET-Oberfläche von ca. 42 m²/g (eigene Herstellung) wurde mit einer Lösung von 4 g H₂SO₄ in 20 ml Wasser imprägniert und bei 150 °C getrocknet. Es ergab sich ein Sulfatgehalt von etwa 3,5 Gew.-% im Katalysator.

### b.) Bestimmung des HCN-Umsatzes

Bei der Bestimmung des HCN-Umsatzes wurde verfahren wie in Beispiel 2, jedoch wurde jetzt der Reaktor in einer Länge von 40 mm mit dem oben unter a.) beschriebenen Katalysator gefüllt. Das Gas setzt sich aus 20 % N₂, 6 % H₂O, 100 ppm HCN sowie 74 % H₂ zusammen. Bei 120 °C und einer GHSV von 3 000 erfolgte ein Umsatz der HCN von 95,5 %. Bei einem vergleichsweise durchgeführten Versuche in gleicher Weise, jedoch ohne vorherige Belegung des Trägers mit Schwefelsäure wurde unter gleichen Bedingungen nur ein Umsatz von 19 % gemessen.

## Patentansprüche

1. Verfahren zur Zersetzung von HCN in Schwelgasen aus der Vergasung von Kohle und Öl,
dadurch gekennzeichnet,
daß das HCN enthaltende Gas über einen Katalysator auf Basis von Titanoxid und/oder Zirkonoxid geleitet wird, wobei der Katalysator als weitere katalytisch aktive Komponenten Molybdän und/oder Vanadium und/oder Wolfram und/oder Mangan und/oder Silizium und/oder Selen und/oder Tellur und/oder Niob und/oder Tantal und/oder Schwefel und/oder Phosphor in Form ihrer Oxide und/oder Oxidhydrate enthält, der Gehalt an Molybdän und/oder Vanadium und/oder Wolfram und/oder Mangan und/oder Silizium und/oder Selen und/oder Tellur und/oder Niob und/oder Tantal und/oder Schwefel und/oder Phosphor in Form ihrer Oxide und/oder Oxidhydrate, berechnet als Oxid ihrer höchsten Wertigkeitsstufe, jeweils 0,05 bis 30 Gew.-% beträgt und das HCN enthaltende Gas Wasserdampf sowie reduzierende Verbindungen enthält.

2. Verfahren nach Anspruch 1,
dadurch gekennzeichnet,
daß der Katalysator noch zusätzlich Alkalioxide und/oder Erdalkalioxide und/oder Eisenoxid und/oder Kobaltoxid und/oder Nickeloxid enthält.

3. Verfahren nach Anspruch 2,
dadurch gekennzeichnet,
daß der Gehalt an Alkalioxiden und/oder Erdalkalioxiden und/oder Eisenoxid und/oder Kobaltoxid und/oder Nickeloxid, berechnet als Oxid der höchsten Wertigkeitsstufe des Metalls, jeweils 0,1 bis 8 Gew.-% beträgt.

4. Verfahren nach den Ansprüchen 1 bis 3,
dadurch gekennzeichnet,
daß der Katalysator die Form von monolithischen Wabenkörpern besitzt.

5. Verfahren nach den Ansprüchen 1 bis 4,
dadurch gekennzeichnet,
daß der HCN-Gehalt des Gases 0,001 bis 2 000 Vol.-ppm beträgt.

6. Verfahren nach den Ansprüchen 1 bis 5,
dadurch gekennzeichnet,
daß das HCN enthaltende Gas mit einer Raumgeschwindigkeit (GHSV) von 1 000 h⁻¹ bis 100 000 h⁻¹ über den Katalysator geleitet wird.

7. Verfahren nach Anspruch 6,
dadurch gekennzeichnet,
daß das HCN enthaltende Gas mit einer Raumgeschwindigkeit (GHSV) von 10 000 h⁻¹ bis 50 000 h⁻¹ über den Katalysator geleitet wird.

8. Verfahren nach den Ansprüchen 1 bis 7,
dadurch gekennzeichnet,
daß das HCN enthaltende Gas bei Temperaturen von 20 bis 200 °C über den Katalysator geleitet wird.

9. Verfahren nach Anspruch 8,
dadurch gekennzeichnet,
daß das HCN enthaltende Gas bei Temperaturen von 100 bis 170°C über den Katalysator geleitet wird.

## Claims

1. A process for decomposing HCN in carbonisation gases from the gasification of coal and oils, characterized in that the HCN-containing gas is passed over a catalyst based on titanium oxide and/or zirconium oxide, the catalyst containing as further catalytically active components molybdenum and/or vanadium and/or tungsten and/or manganese and/or silicon and/or selenium and/or tellurium and/or niobium and/or tantalum and/or sulphur and/or phosphorus in the form of their oxides and/or hydrated oxides, the content of molybdenum and/or vanadium and/or tungsten and/or manganese and/or silicon and/or selenium and/or tellurium and/or niobium and/or tantalum and/or sulphur and/or phosphorus in the form of their oxides and/or hydrated oxides is in each case from 0.05 to 30% by weight, calculated as oxide of their highest oxidation state, and the HCN-containing gas contains water vapour and reducing compounds.

2. A process according to Claim 1, characterized in that the catalyst additionally contains alkali metal oxides and/or alkaline earth metal oxides and/or iron oxide and/or cobalt oxide and/or nickel oxide.

3. A process according to Claim 2, characterized in that the content of alkali metal oxides and/or alkaline earth metal oxides and/or iron oxide and/or cobalt oxide and/or nickel oxide is in each case from 0.1 to 8% by weight, calculated as oxide of the highest oxidation state of the metal.

4. A process according to any of Claims 1 to 3, characterized in that the catalyst is in the form of monolithic honeycomb bodies.

5. A process according to any of Claims 1 to 4, characterized in that the HCN content of the gas is from 0.001 to 2,000 ppm by volume.

6. A process according to any of Claims 1 to 5, characterized in that the HCN-containing gas is passed over the catalyst at a space velocity (GHSV) of from 1,000 h⁻¹ to 100,000 h⁻¹.

7. A process according to Claim 6, characterized in that the HCN-containing gas is passed over the catalyst at a space velocity (GHSV) of from 10,000 h⁻¹ to 50,000 h⁻¹.

8. A process according to any of Claims 1 to 7, characterized in that the HCN-containing gas is passed over the catalyst at temperatures of from 20 to 200°C.

9. A process according to Claim 8, characterized in that the HCN-containing gas is passed over the catalyst at temperatures of from 100 to 170°C.

## Revendications

1. Procédé de destruction de CNH dans des gaz de carbonisation à basse température provenant de la gazéification du charbon et de l'huile,
caractérisé en ce que
le gaz contenant du CNH est conduit sur un catalyseur à base d'oxyde de titane et/ou d'oxyde de zirconium, dans lequel le catalyseur contient à titre de composants supplémentaires actifs catalytiquement du molybdène, et/ou du vanadium et/ou du tungstène et/ou du manganèse et/ou du silicium et/ou du sélénium et/ou du tellure et/ou du niobium et/ou du tantale et/ou du soufre et/ou du phosphore, sous forme de leur oxyde et/ou de leur hydrate d'oxyde, en ce que la teneur en molybdène et/ou en vanadium et/ou en tungstène et/ou en manganèse, et/ou en silicium et/ou en sélénium et/ou en tellure, et/ou en niobium et/ou en tantale et/ou en soufre et/ou en phosphore sous forme de leurs oxydes et/ou hydrate d'oxyde, calculé en tant qu'oxyde de leur degré de valence le plus élevé est chaque fois de 0,05 à 30 % en poids,
et en ce que le gaz contenant du CNH contient de la vapeur d'eau ainsi que des composés réducteurs.

2. Procédé selon la revendication 1,
caractérisé en ce que
le catalyseur contient encore en supplément des oxydes de métal alcalin et/ou des oxydes de métal alcalino-turreux et/ou de l'oxyde de fer et/ou de l'oxyde de cobalt et/ou de l'oxyde de nickel.

3. Procédé selon la revendication 2,
caractérisé en ce que
la teneur en oxydes de métal alcalin et/ou en oxydes de métal alcalino-terreux et/ou en oxyde de fer et/ou en oxyde de cobalt et/ou en oxyde de nickel, calculé en tant qu'oxyde du degré de valence le plus élevé du métal, est chaque fois de 0,1 à 8 % en poids.

4. Procédé selon les revendications 1 à 3,
caractérisé en ce que
le catalyseur possède la forme de corps en nid d'abeilles monolithiques.

5. Procédé selon les revendications 1 à 4,
caractérisé en ce que
la teneur en CNH du gaz est de à 0,001 à 2000 ppm en volume.

6. Procédé selon les revendications 1 à 5,
caractérisé en ce que
le gaz contenant du CNH est conduit avec une vitesse spatiale (GHSV) allant de 1000 h⁻¹ à 100 000 h⁻¹ sur le catalyseur.

7. Procédé selon la revendication 6,
caractérisé en ce que
le gaz contenant du CNH est conduit sur le catalyseur avec une vitesse spatiale (GHSV) allant de 10 000 h⁻¹ à 50 000 h⁻¹.

8. Procédé selon les revendications 1 à 7,
caractérisé en ce que
le gaz contenant du CNH est conduit sur le catalyseur à des températures allant de 20 à 200°C.

9. Procédé selon la revendication 8,
caractérisé en ce que
le gaz contenant du CNH est conduit sur le catalyseur à des températures allant de 100 à 170°C.
